(19) Europäisches Patentamt
European Patent Office
Office européen des brevets

(11) Veröffentlichungsnummer: **0 098 439**
**A1**

(12)
# EUROPÄISCHE PATENTANMELDUNG

(21) Anmeldenummer: **83105991.0**

(51) Int. Cl.³: **C 08 K 5/18**

(22) Anmeldetag: **20.06.83**

(30) Priorität: **26.06.82 DE 3223883**

(43) Veröffentlichungstag der Anmeldung: **18.01.84**
**Patentblatt 84/3**

(84) Benannte Vertragsstaaten: **BE DE FR GB NL**

(71) Anmelder: **BASF Aktiengesellschaft,**
**Carl-Bosch-Strasse 38, D-6700 Ludwigshafen (DE)**

(72) Erfinder: **Ruland, Alfred, Dr., Schriesheimer Strasse 11,**
**D-6945 Hirschberg (DE)**
Erfinder: **Reuther, Wolfgang, Dr., Am Pferchelhang 16,**
**D-6900 Heidelberg (DE)**
Erfinder: **Paulus, Gerhard, Dr., Roonstrasse 1,**
**D-6940 Weinheim (DE)**
Erfinder: **Queins, Hubertus, Dr., Leininger Strasse 7,**
**D-6701 Friedelsheim (DE)**
Erfinder: **Schoeppl, Hubert, Dr., Zinkgraefstrasse 58,**
**D-6940 Weinheim (DE)**
Erfinder: **Segnitz, Adolph, Dr., Weimarer Strasse,**
**D-4530 Ibbenbüren 1 (DE)**

(54) **Verwendung von Nitrilen als Antioxidantien für Kunststoffe.**

(57) Die Erfindung betrifft die Verwendung von Verbindungen der Formel

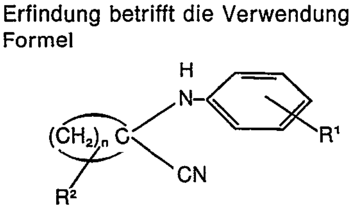
,

in welcher stehen:
$R^1$ für Wasserstoff, Alkyl mit 1 bis 5 C-Atomen, Alkoxy mit 1 bis 5 C-Atomen, Halogen, Cyano-, Nitrogruppen oder gegebenenfalls für substituiertes Phenyl oder für 1-Aminocycloalkylcarbonsäurenitril,
$R^2$ für Wasserstoff oder Alkyl mit 1 bis 5 C-Atomen und
n für eine ganze Zahl von 4 bis 6, als Antioxidantien für Kunststoffe.

EP 0 098 439 A1

Verwendung von Nitrilen als Antioxidantien für Kunststoffe

Die Erfindung betrifft die Verwendung bestimmter Amine als Antioxidantien für Kunststoffe.

Im allgemeinen werden vulkanisierte Kautschuke aus synthetischen oder natürlichen Ausgangsstoffen durch Licht, Ozon oder Sauerstoff sowie durch dynamische Ermüdung und Wärme zersetzt. Sie sind dann in der Regel für ihren vorgesehenen Einsatzzweck nicht mehr verwendbar. Selbst bei unvulkanisiertem Kautschuk können Zersetzungserscheinungen auftreten, die die Verarbeitung negativ beeinflussen.

Zur Vermeidung derartiger Alterungs- bzw. Zersetzungserscheinungen werden dem Kautschuk bzw. den Kautschukmischungen Antioxidantien zugesetzt. Bei den bisher bekannten Antioxidantien handelt es sich vor allem um Derivate des p-Phenylendiamins des Di- und Tetrahydrochinolins, des Naphthylamins sowie um Derivate sterisch gehinderter Phenole. Eine zusammenfassende Übersicht über das Gebiet der Stabilisierung von Kunststoffen und Elastomeren gibt I. Voigt, Die Stabilisierung der Kunststoffe gegen Licht und Wärme, Springer Verlag, Berlin, Heidelberg, New York; 1966 sowie L.A. Carmichael; Antioxidants and Stabilizers for Polymers and Elastomers; Stanford Research Institute, Menlo Park, California, 1973.

In der JA OS 71 43 201 sind außerdem bereits Cyanocycloalkylharnstoffderivate als Lichtstabilisatoren für Kunststoffe, Kautschuke und Fasern beschrieben.

Es besteht die Aufgabe, weitere einfach zugängliche Stabilisatoren zur Verfügung zu stellen.

Vo/P

Die Erfindung betrifft daher die Verwendung von Verbindungen der Formel

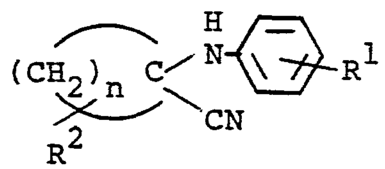
,

in welcher stehen:

$R^1$ für Wasserstoff, Alkyl mit 1 bis 5 C-Atomen, Alkoxy mit 1 bis 5 C-Atomen, Halogen, Cyano-, Nitrogruppen oder gegebenenfalls für substituiertes Phenyl oder für 1-Aminocycloalkylcarbonsäurenitril,

$R^2$ für Wasserstoff oder Alkyl mit 1 bis 5 C-Atomen

und

n für eine ganze Zahl von 4 bis 6,

als Antioxidantien für Kunststoffe.

Die erfindungsgemäßen Antioxidantien zeigen hervorragende Eigenschaften für die thermische, insbesondere aber auch für die dynamische Alterung von Kunststoffen, insbesondere von Elastomeren. Diese Verbindungen stellen somit eine Bereicherung der Technik dar, da sie leicht zugänglich sind.

Die alpha-Aminonitrile gemäß Anspruch 1 sind an sich bekannt (vgl. H.Th. Bucherer und H. Fischbeck, J. Prakt. Chem. 140, 69 (1934); A.E. Bond, T. Deegan, S:G.P. Plant, J. Chem. Soc. 1949, 160; H.T. Bucherer, W. Brand, J. Prakt. Chem., 140, 129 (1934); M.W. Bukhsh, R.D. Desai, R. Hunter and M. Hussain, J. Chem. Soc. 1936, 1159) und lassen sich nach bekannten Verfahren herstellen.

Es war auch bereits bekannt, daß diese Verbindungen fungizid oder analgetisch wirksam sind. Überraschend und nicht vorhersehbar war deren Eignung als Antioxidantien für Kunststoffe.

Um die im Anspruch näher bezeichneten alpha-Aminonitrile herzustellen, setzt man ein cycloaliphatisches Keton mit einem aromatischen Amin in Gegenwart von Alkali- bzw. Erdalkalicyaniden, vorzugsweise Natrium- und Kaliumcyanid in Gegenwart einer Säure, vorzugsweise Essigsäure, mit oder ohne zusätzlichem Lösungsmittel bei Temperaturen zwischen 0 und 50°C gemäß nachstehender Gleichung um. (Die Reste $R^1$, $R^2$ und n haben die im Patentanspruch 1 angegebene Bedeutung.)

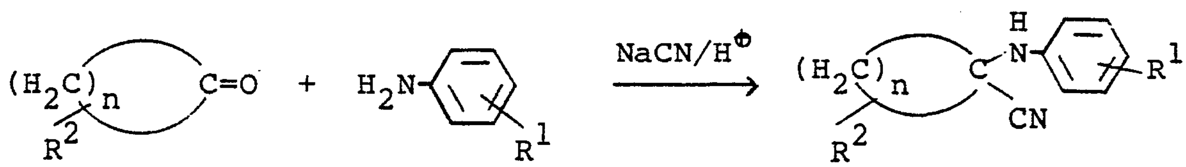


Bevorzugt werden folgende Verbindungen angewendet:

1-(Phenylamino)-cyclohexancarbonsäurenitril;
1-[2-Methyl-(phenylamino)]-cyclohexancarbonsäurenitril, Schmelzpunkt 180°C;
(1,2-Phenylendiamino)-1,1'-bis-cyclohexancarbonsäurenitril, Schmelzpunkt 140°C, und
(1,4-Phenylendiamino)-1,1'-bis-cyclohexancarbonsäurenitril, Schmelzpunkt 178°C.

Als Kunststoffe für die Anwendung der Antioxidantien seien genannt: PP, PE, PS, SAN-Copolymerisate. Insbesondere kommen jedoch die mit Kautschuken verstärkten Thermoplaste, wie ABS, ASA, schlagfestes Polystyrol und dergleichen für die Anwendung in Betracht. Bevorzugt werden die Antioxidantien für Kautschuke (Elastomere) verwendet.

Unter Kautschuken sind dabei hochmolekulare Verbindungen zu verstehen, die eine Glastemperatur von weniger als $0^{o}C$, vorzugsweise weniger als $-30^{o}C$, aufweisen (K.H. Illers, Kolloid-Zeitschrift 1976, Seite 110, 1961). Dabei kommen beispielsweise in Frage: Naturkautschuk, Synthesekautschuke, wie Polybutadien, Polyisopren und Copolymerisate von Butadien mit Styrol oder Acrylnitril, ferner Elastomere auf Basis von Alkylestern der Acrylsäure, wobei der Alkylrest 1 bis 8 C-Atome aufweisen kann, Copolymerisate von Alkylestern der Acrylsäure mit Butadien, Styrol, Acrylnitril und Vinylethern, sowie Copolymerisate aus Ethylen-Propylen und einem nichtkonjugierten Dien (EPDM-Kautschuke).

Die erfindungsgemäß anzuwendenden Antioxidantien werden in Mengen von 0,5 - 10 Gew.%, insbesondere von 1 - 4 Gew.%, bezogen auf das Verstärkungsmittel (Kautschuk) angewendet.

Für die Durchführung der Beispiele und von Vergleichsversuchen wurden folgende Produkte verwendet:

A: 1-(Phenylamino)-cyclohexancarbonsäurenitril

In eine Lösung aus 150 g (1,05 Mol) Cyclohexanon, 94 g (1 Mol) Anilin und 400 g Eisessig wird unter Rühren zwischen 5 - $10^{o}C$ innerhalb 1 h eine Lösung (50 % w/w) von 70 g (1,08 Mol) Kaliumcyanid in Wasser zugetropft. Man rührt noch 15 Minuten nach, filtriert

das ausgefallende Produkt ab, wäscht zweimal mit Wasser und kristallisierte aus Petrolether um.

Ausbeute: 145 g (72 % d.Th.), Schmelzpunkt 75°C

| | | | | |
|---|---|---|---|---|
| $C_{13}H_{16}N_2$ | ber. | C 77,9 | H 8,0 | N 13,9 |
| (200,3) | gef.: | C 77,7 | H 8,3 | N 14,1. |

Entsprechend wurden erhalten:

1) 1-[2-Methyl-(phenylamino)]-cyclohexancarbonsäurenitril, Schmelzpunkt 180°C
2) (1,2-Phenylendiamino)-1,1'-bis-cyclohexancarbonsäurenitril, Schmelzpunkt 140°C
3) (1,4-Phenylendiamino)-1,1'-bis-cyclohexancarbonsäurenitril, Schmelzpunkt 178°C.

B) Phenylbetanaphthylamin
C) Octylphenol
D) N-Isopropyl-N'-phenyl-p-phenylendiamin
E) ohne Alterungsschutz

Nachstehend wird die Erfindung anhand von einem Beispiel und vier Vergleichsversuchen näher erläutert. Alle darin genannten Teile und Prozente beziehen sich auf das Gewicht.

Beispiel und Vergleichsversuche

Zur Prüfung der Alterungsschutzwirkung wurde ein Elastomer auf Basis von Naturkautschuk (Smoked Sheets) verwendet. Dafür wurde auf folgende Testmischung zurückgegriffen:

| | Teile |
|---|---|
| Smoked Sheets RSS 1 | 100 |
| Ruß ASTM N 330 | 40 |
| Aromat. Weichmacher*) | 3 |
| Stearinsäure | 1,5 |
| Zinkoxid | 5 |
| Alterungsschutzmittel | 2 |
| Schwefel | 2,5 |
| N-cyclohexyl-2-benzothiazyl--sulfenamid | 1 |

*) Auf Basis von Kohlenwasserstoffen, z.B. INGRALEN® 450 oder NAFTOLEN® ZD.

Die Ergebnisse der mit den Alterungsschutzmitteln erhaltenen mechanischen Daten der Vulkanisate sind in der nachfolgenden Tabelle wiedergegeben.

Die Versuche B bis D repräsentieren den Stand der Technik, Versuch A zeigt die Wirkung des erfindungsgemäßen Alterungsmittels. Zum Vergleich ist noch ein Vulkanisat E beschrieben, das ohne Verwendung von Alterungshilfsmitteln hergestellt worden ist.

Tabelle

| Mechanische Daten der Vulkanisate | A | B | C | D | E |
|---|---|---|---|---|---|
| Vulkanisation bei 143 $^{o}$C (min) | 20 | 25 | 20 | 25 | 20 |
| Spannungswert 300 % ($N/mm_2$) | 9,1 | 10,9 | 12,8 | 10,8 | 13,4 |
| Festigkeit ($N/mm^2$) | 25,2 | 29,0 | 27,6 | 28,3 | 26,9 |
| Dehnung (%) | 592 | 602 | 552 | 566 | 506 |
| Härte ($^o$ Shore A) | 59 | 60 | 61 | 60 | 62 |
| Wärmealterung 48 h 100 $^{o}$C | | | | | |
| Spannungswert 300 % ($N/mm_2$) | 13,6 | 14,0 | 16,5 | 17,0 | 15,3 |
| Festigkeit ($N/mm^2$) | 20,6 | 18,0 | 16,3 | 19,0 | 13,2 |
| Dehnung (%) | 427 | 380 | 337 | 350 | 315 |
| Härte ($^o$ Shore A) | 62 | 62 | 65 | 65 | 62 |
| Wärmealterung 100 h 100 $^{o}$C | | | | | |
| Spannungswert 300 % ($N/mm_2$) | 13,4 *) | 13,0 *) | 15,2 *) | 16,0 *) | 12,4 *) |
| Festigkeit ($N/mm^2$) | 13,8 | 11,5 | 11,5 | 12,5 | 6,3 |
| Dehnung (%) | 320 | 280 | 262 | 290 | 204 |
| Härte ($^o$ Shore A) | 63 | 63 | 64 | 64 | 62 |

*) Diese Werte sind extrapoliert.

Aus dem Vergleich der Ergebnisse folgt:

Das erfindungsgemäße Carbonsäurenitril A zeigt sehr guten Schutz gegen Wärmebeanspruchung. Dies zeigt sich bei der Alterung bei 100°C nach einer Versuchsdauer von 48 und 100 h durch hohe Restfestigkeit und hohe Dehnung gegenüber handelsüblichen Alterungsschutzmitteln (vgl. B, C und D).

## Patentansprüche

1. Verwendung von Verbindungen der Formel

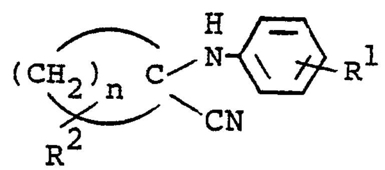,

in welcher stehen:

$R^1$ für Wasserstoff, Alkyl mit 1 bis 5 C-Atomen, Alkoxy mit 1 bis 5 C-Atomen, Halogen, Cyano-, Nitrogruppen oder gegebenenfalls für substituiertes Phenyl oder für 1-Aminocycloalkylcarbonsäurenitril,

$R^2$ für Wasserstoff oder Alkyl mit 1 bis 5 C-Atomen und

n für eine ganze Zahl von 4 bis 6,

als Antioxidantien für Kunststoffe.

2. Kunststoffe, enthaltend Verbindungen gemäß Anspruch 1.

Europäisches Patentamt

0098439

**EUROPÄISCHER RECHERCHENBERICHT**

Nummer der Anmeldung

EP 83 10 5991

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | CH-A- 390 270 (J.R. GEIGY AG) * Ansprüche 1,2; Seite 1, Zeilen 68-73 * --- | 1,2 | C 08 K 5/18 |
| A | CHEMICAL ABSTRACTS, Band 77, Nr. 16, 16. Oktober 1972, Seite 36, Nr. 102730v, Columbus, Ohio, USA & JP - A - 71 43201 (SANKYO CO., LTD.) 21.12.1971 ----- | 1,2 | |
| | | | RECHERCHIERTE SACHGEBIETE (Int. Cl. 3) |
| | | | C 08 K<br>C 08 L |

Der vorliegende Recherchenbericht wurde für alle Patentansprüche erstellt.

| Recherchenort | Abschlußdatum der Recherche | Prüfer |
|---|---|---|
| DEN HAAG | 03-10-1983 | HOFFMANN K.W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03.82